# EUROPEAN PATENT APPLICATION

(11) **EP 2 068 233 A2**
(43) Date of publication of application: **10.06.2009**
(21) Application number: 08105878.6
(22) Date of filing: 27.11.2008
(51) Int. Cl.: G06F 3/045

(54) **Panel-type input device**

(30) Priority: 27.11.2007 JP 2007306437
(71) Applicant: Fujitsu Component Limited, Tokyo 141-8630 (JP)
(72) Inventor: Endo, Michiko, Tokyo 141-8630 Shinagawa-ku (JP)
(74) Representative: Finnie, Peter John

(57) **Abstract**

A panel-type input device including a pair of electrode plates, each electrode plate including a substrate and a conductive coat provided on a surface of the substrate; and a plurality of dot spacers formed in a dispersed arrangement on a surface of the conductive coat of at least one of the electrode plates. The electrode plates are assembled with each other in a relative arrangement such that respective conductive coats are opposed to and spaced from each other while permitting a conductive contact therebetween. The conductive coat of at least one of the electrode plates is formed by using a conducting polymer. The dot spacers are formed in such a manner that a value A = H/D, representing a relationship between an overall height H[µm] of each dot spacer measured from the surface of the conductive coat, on which the dot spacers are formed, and a substantial disposition interval D[mm] of the dot spacers on the surface, is in a range of 1.5 < A < 6.0.

## Description

### Field of the Invention

The present invention relates to a panel-type input device.

### Background of the Invention

A panel-type input device has been known as an input device of an electronic apparatus including a display unit, such as a personal computer, a personal digital assistant (PDA), an automatic teller machine (ATM), etc., which is operated to indicate two-dimensional coordinate data in the display unit by an operator pressing a desired point on a panel surface with his finger or a pen. In particular, a panel-type input device with a transparent structure, which can be mounted on a screen of a display unit, such as a liquid crystal display (LCD), a plasma display panel (PDP), a cathode ray tube (CRT), etc., has been widely used as a touch panel, and in recent years, has been mounted on a portable terminal unit having a mobile-phone function.

A resistive-type touch panel, as one example of a panel-type input device, includes a pair of transparent electrode plates, each having a transparent insulating substrate and a transparent electrical-conductive coat provided on one surface of the substrate, and has a configuration wherein the electrode plates are assembled with each other in such a relative arrangement that the conductive coats are opposed to and spaced from each other while permitting conductive contact therebetween (see, e.g., Japanese Unexamined Patent Publication (Kokai) No. 2005-190125 (JP-A-2005-190125)). The electrode plates are fixed to each other in a mutually superposed state by an electrical-insulating adhesive layer having a strip shape and provided along the outer edges of the opposed conductive coats. Within a region of each electrode plate, in which the adhesive layer is provided, a pair of positive and negative strip-shaped electrodes are formed to be connected to the conductive coat and disposed to be parallel to and spaced from each other (hereinafter referred generically to as a parallel electrode pair), and conductors are formed to be connected to the parallel electrode pair and patterned on the conductive coat with an insulating layer interposed between the conductors and the conductive coat.

Such a laminated structure (hereinafter referred generically as an intermediate layer), formed in the region in which the adhesive layer is provided, defines and ensures a spacing distance between the conductive coats of the electrode plates. The electrode plates are provided with a frame-shaped area (hereinafter referred to as a frame area) defined correspondingly to the region in which the intermediate layer is provided, and an input-permissible area surrounded by and defined inside the frame area. In the input-permissible area, a plurality of electrical-insulating dot spacers are provided in a suitably dispersed arrangement on the conductive coat of one of the electrode plates. The dot spacers serve to suppress an unintended concave flexure of the electrode plates due to, e.g., their own weight, so as to maintain a gap between the opposed conductive coats and, when either one of the electrode plates deforms under a pressing force, to allow local contact between the opposed conductive coats at a pressing point.

Generally, in a conventional resistive-type touch panel, the substrate of the electrode plate at a touching-operation side (or an upper side) is formed from a flexible resin film, and the substrate of the electrode plate at a display side (or a lower side) is formed, depending on applications, from a glass plate, a resin plate, a resin film, etc. The conductive coat is generally formed on the surface of each substrate by a coat-forming technology, such as vacuum deposition, sputtering, etc., using a metal oxide such as an indium tin oxide (ITO). In recent years, it has been proposed to form the conductive coat of the electrode plate of the resistive-type touch panel from an electrically conductive polymer (hereinafter referred to as a conducting polymer) (see, e.g., Japanese Unexamined Patent Publication (Kokai) No. 2005-182737 (JP-A-2005-182737), Japanese Unexamined Patent Publication (Kokai) No. 2005-146259 (JP-A-2005-146259). An electrically conductive coat formed from a conducting polymer has advantages that compared to an ITO coat, the conducting polymer coat is excellent in impact resistance, writing durability, etc., and can be formed by a simple process such as coating or printing.

In a conventional resistive-type touch panel, a configuration in which the conductive coat of at least one of the electrode plates is formed by using a conducting polymer, tends to have properties such that the conductive coats are more likely to stick to each other at a pressing point due to a local pressing force applied by an input operation, because of a nature of the conducting polymer, as compared to, e.g., a configuration in which the conductive coats of both of the electrode plates are formed from an ITO coat. If the conductive coats, having contacted with each other at the pressing point, do not separate from each other at an instant when the pressing force is relieved, input responsiveness of the touch panel is impaired. This tendency becomes more pronounced as the humidity of the atmosphere is higher. In order to prevent the local mutual sticking of the conductive coats as described above, it is effective to increase the overall height of the dot spacers, or to narrow the disposition interval of the dot spacers. However, both of these measures may increase a pressing force required for an input operation, which may lead to the degradation of operability of the touch panel.

### Summary of the Invention

It is an object of the present invention to provide a panel-type input device having a resistive-type configuration, which includes electrode plates provided with conductive coats having superior properties, such as impact resistance, writing durability, etc., and which is capable of preventing the conductive coats from sticking to each other due to a local pressing force applied by an input operation without degrading input operability.

To accomplish the above object, the present invention provides a panel-type input device comprising a pair of electrode plates, each electrode plate including a substrate and a conductive coat provided on a surface of the substrate; and a plurality of dot spacers formed in a dispersed arrangement on a surface of the conductive coat of at least one of the electrode plates; wherein the electrode plates are assembled with each other in a relative arrangement such that respective conductive coats are opposed to and spaced from each other while permitting a conductive contact therebetween; wherein the conductive coat of at least one of the electrode plates is formed by using a conducting polymer; and wherein the dot spacers are formed in such a manner that a value A = H/D, representing a relationship between an overall height Hµm of each dot spacer measured from the surface of the conductive coat, on which the dot spacers are formed, and a substantial disposition interval Dmm of the dot spacers on the surface, is in a range of 1.5 < A < 6.0.

According to the present invention, the panel-type input device, in which the conductive coat of at least one electrode plate is formed by using a conducting polymer, can possess superior properties of the conductive coat, such as impact resistance, writing durability, etc., compared to, e.g., a conventional touch panel in which both electrode plates are provided with ITO coats, and thus can ensure highly-precise and stable input operation for a long period. Further, since the dot spacers are formed in accordance with the specific A-value, it is possible to prevent the conductive coats from sticking to each other due to a local pressing force applied by an input operation without degrading input operability.

### Brief Description of the Drawings

The above and other objects, features and advantages of the present invention will become more apparent from the following description of preferred embodiments in connection with the accompanying drawings, wherein:
Fig. 1A is a sectional view schematically showing a panel-type input device according to a first embodiment of the present invention in a non-operated state, and enlarged in a thickness direction;
Fig. 1B is a sectional view schematically showing the panel-type input device of Fig. 1A in an operated state;
Fig. 2 is an exploded perspective view showing major components of the panel-type input device of Fig. 1;
Fig. 3A is a schematic plan view showing one modification of the disposition of dot spacers;
Fig. 3B is a schematic plan view showing another modification of the disposition of dot spacers; and
Fig. 4 is an illustration showing the result of an experiment for clarifying effects obtained by the panel-type input device according to the present invention.

### Description of the Preferred Embodiment

The embodiments of the present invention are described below in detail, with reference to the accompanying drawings. In the drawings, the same or similar components are denoted by common reference numerals.

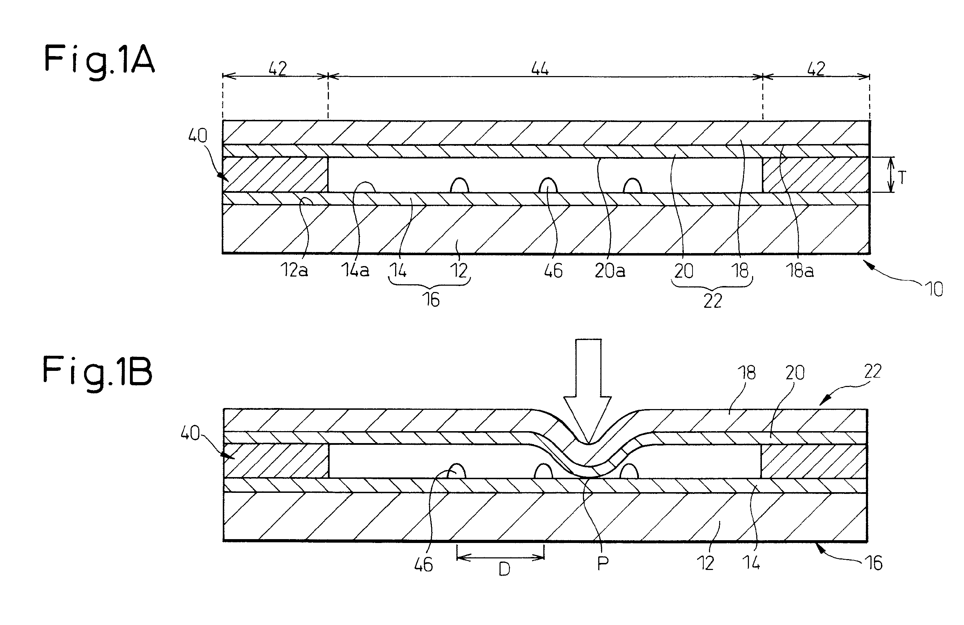

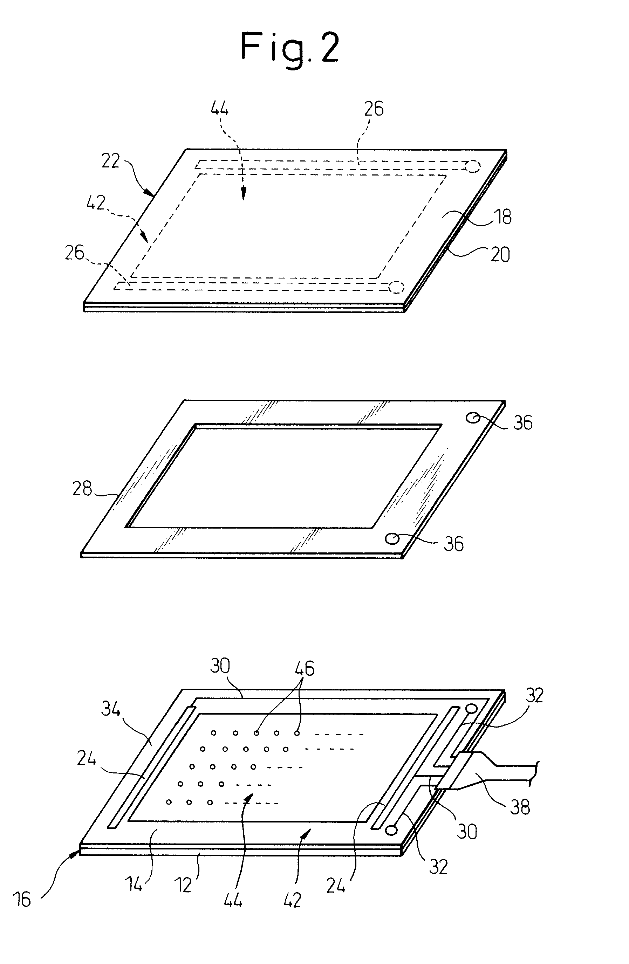

Referring to the drawings, Figs. 1A and 1B show, in schematic sectional views, essential components of a panel-type input device 10 according to a first embodiment of the present invention in non-operated and operated states, and Fig. 2 shows, in an exploded schematic perspective view, the essential components of the panel-type input device 10.

The panel-type input device 10 includes a first electrode plate 16 having a first electrical-insulating substrate 12 and a first electrical-conductive coat 14 provided on a surface 12a of the first substrate 12, a second electrode plate 22 having a second electrical-insulating substrate 18 and a second electrical-conductive coat 20 provided on a surface 18a of the second substrate 18. The first substrate 12 and first conductive coat 14 of the first electrode plate 16 and the second substrate 18 and second conductive coat 20 of the second electrode plate 22 have generally rectangular profiles identical to each other as seen in a plan view.

A pair of strip-shaped, positive and negative first electrodes (i.e., a first parallel electrode pair) 24 are provided on the first conductive coat 14 of the first electrode plate 16 at a location along a pair of opposing sides of the rectangular profile, and patterned and laminated directly on the first conductive coat 14 through, e.g., a screen printing, so as to be electrically connected to the first conductive coat 14. Similarly, a pair of strip-shaped, positive and negative second electrodes (i.e., a second parallel electrode pair) 26 are provided on the second conductive coat 20 of the second electrode plate 22 at a location along another pair of opposing sides of the rectangular profile, different from the location of the first parallel electrode pair 24, and patterned and laminated directly on the second conductive coat 20 through, e.g., a screen printing, so as to be electrically connected to the second conductive coat 20.

The first electrode plate 16 and the second electrode plate 22 are assembled with each other in a relative arrangement such that the first and second conductive coats 14, 20 are opposed to and spaced from each other while permitting a conductive contact therebetween, and are fixed to each other in a mutually superposed state by an electrical-insulating adhesive layer 28 (e.g., a double-sided adhesive tape) having a strip shape (a rectangular frame shape, in the illustrated embodiment) and provided along the outer edges of the opposed conductive coats 14, 20. In this assembly, the first and second conductive coats 14, 20 are disposed at positions where their respective profiles are substantially aligned with each other, and the first and second parallel electrode pairs 24, 26 are disposed at positions different or rotated from each other by 90 degrees. The adhesive layer 28 is not limited to the continuous rectangular-frame form as illustrated, but may be formed from several separated strip elements.

In the illustrated embodiment, a pair of first conductors 30 individually connected to the first parallel electrode pair 24 and a pair of second conductors 32 individually connected to the second parallel electrode pair 26 are provided on the first conductive coat 14 of the first electrode plate 16 and patterned into predetermined profiles on the first conductive coat 14 through, e.g., screen printing, with an insulating layer 34 interposed between the conductors and the conductive coat. In this configuration, the second conductors 32 are individually connected to the corresponding second electrodes 26 via an electrical-conductive portion 36 formed as a part of the adhesive layer 28 in a state where the first and second electrode plates 16, 22 are assembled with each other in the aforementioned relative arrangement. The first and second conductors 30, 32 are collected at a predetermined location on the first electrode plate 16, and connected to a connector (e.g., a flexible printed circuit board) 38 constituting an interface with a not-shown control circuit.

The first and second parallel electrode pairs 24, 26, the first and second conductors 30, 32, as well as the insulating layer 34 are formed within a region in which the adhesive layer 28 is provided, and constitute an intermediate layer 40 extending in a strip shape (a rectangular frame shape, in the illustrated embodiment) along the outer edges of the first and second electrode plates 16, 22. The intermediate layer 40 functions as a spacer defining and ensuring a spacing distance T between the conductive coats 14, 20 of the first and second electrode plates 16, 22.

The first and second electrode plates 16, 22 are provided with a frame-shaped area (i.e., a frame area) 42 defined correspondingly to the region in which the intermediate layer 40 is provided, and an input-permissible area 44 surrounded by and defined inside the frame area 42 (Figs. 1A to 2). In the input-permissible area 44, a plurality of electrical-insulating dot spacers 46 are provided in a suitably dispersed arrangement on the conductive coat 14, 20 (the first conductive coat 14, in the drawing) of at least one of the first and second electrode plates 16, 22 (the first electrode plate 16, in the drawing) (Figs. 1A and 1B). The dot spacers 46 act to suppress an unintended concave flexure of the respective electrode plates 16, 22 due to, e.g., their own weight, so as to keep a gap between the opposed conductive coats 14, 20 and, when either one of the electrode plates 16, 22 deforms under a pressing force, to allow a local contact between the opposed conductive coats 14, 20 at a pressing point.

The panel-type input device 10 operates under the control of a control circuit (not shown) by applying a predetermined voltage alternately to the first parallel electrode pair 24 and the second parallel electrode pair 26, connected respectively to the first conductive coat 14 of the first electrode plate 16 and the second conductive coat 20 of the second electrode plate 22. In this state, when a desired position of the outer surface of, e.g., the second substrate 18 of the second electrode plate 22 is pressed with a pen or a finger, etc., the conductive coats 14, 20 come into conductive contact with each other at a pressing point P (Fig. 1 B), and a divided voltage corresponding to the position of the pressing point P is outputted from one of the conductive coats 14, 20 to which a voltage is not applied. A processing section (not shown) provided in the control circuit measures the divided voltage alternately generated in the conductive coats 14, 20, and thereby detects a two-dimensional coordinate of the pressing point P.

The panel-type input device 10 according to the present invention has a characteristic configuration in which at least one of the first conductive coat 14 of the first electrode plate 16 and the second conductive coat 20 of the second electrode plate 22 is formed by using a conducting polymer. The property and specific material of the conducting polymer will be described later. Further, the dot spacers 46 are formed in such a manner that a value A = H/D is in the range of 1.5 < A < 6.0, the value A representing a relationship between the overall height H (µm) of each dot spacer measured from the surface 14a, 20a of the first or second conductive coat 14, 20, on which the dot spacers 46 are formed, and a substantial disposition interval D (mm) of the dot spacers 46 on the surface 14a, 20a.

The dot spacers 46 can be formed through, e.g., a photolithographic technique or screen printing, on the surface 14a, 20a of the first conductive coat 14 or the second conductive coat 20, so as to highly precisely ensure positions and dimensions of the dot spacers. In the illustrated embodiment, the dot spacers 46 are formed on the first conductive coat 14 of the first electrode plate 16 dispersedly in a square grid array through such a highly-precisely forming process.

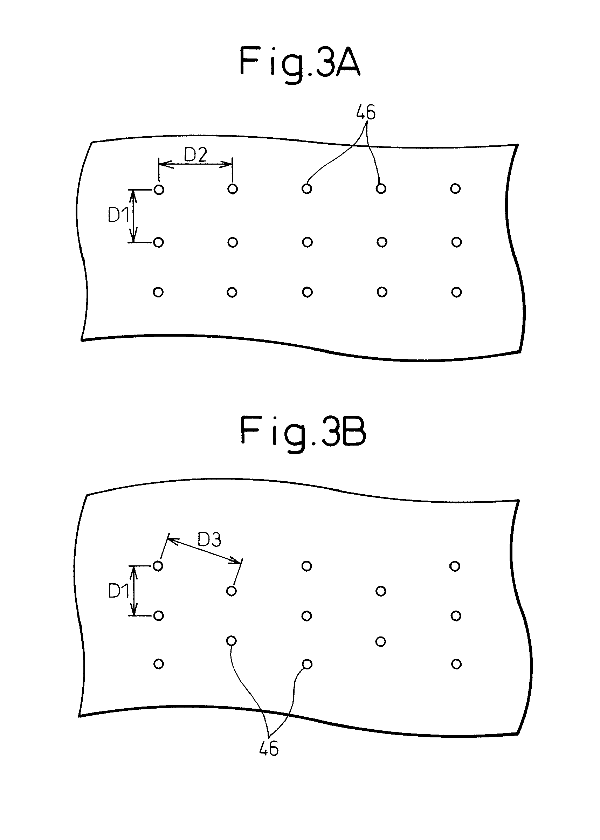

The term "substantial disposition interval D" represents, in a disposition as the square grid array in the illustrated embodiment, a distance D between the center points of side-by-side dot spacers 46 in both vertical and horizontal rows (Fig. 1), but in the other disposition such as shown in Figs. 3A and 3B, represents a distance defined by a specific rule. For example, in the case of another grid array in which a distance between the center points of side-by-side dot spacers 46 in a vertical row is different from a distance between the center points of side-by-side dot spacers 46 in a horizontal row (Fig. 3A), the "substantial disposition interval D" represents the average of the vertical distance D1 and the horizontal distance D2. In the case of a staggered array in which a distance between the center points of side-by-side dot spacers 46 in a vertical row is different from a distance between the center points of side-by-side dot spacers 46 in an oblique row (Fig. 3B), the "substantial disposition interval D" represents the average of the vertical distance D1 and the oblique distance D3.

In order to clarify the grounds for the definition of the aforementioned range of the A-value, the contents and results of experiments carried out by the inventor of the present application will be explained below.

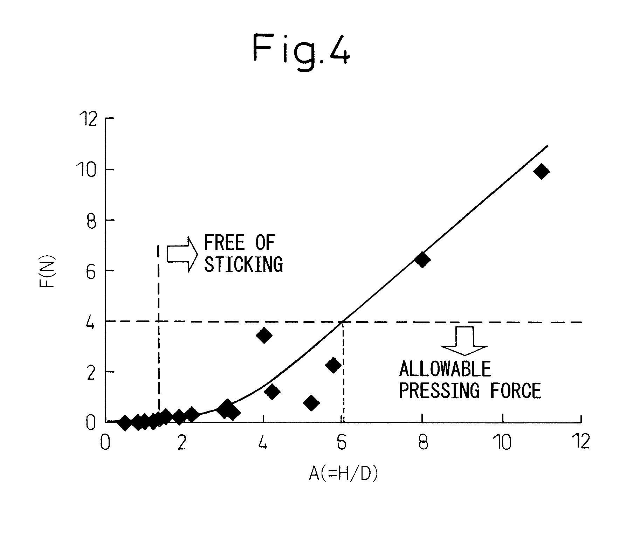

A sample of the panel-type input device 10 was prepared in such a manner as to prepare a first electrode plate 16 configured by coating a first substrate 12 formed from a glass plate with a first conductive coat 14 formed from an ITO coat, provide a plurality of dot spacers 46 dispersedly in a square grid array through a photolithographic technique on the surface 14a of a first conductive coat 14 of the first electrode plate 16, prepare a second electrode plate 22 configured by coating a second substrate 18 formed from a PET film with a second conductive coat 20 formed from a polythiophen-based conducting polymer, and assemble the second electrode plate 22 with the first electrode plate 16 in a proper relative arrangement. For this sample, a rubber-made pushing member (Shore-A hardness 60) having a hemispherical end face with 8mm radius was used to press a predetermined position on the outer surface of the second electrode plate 22, and a pressing force F applied at an instant when the first and second conductive coats 14, 20 are brought into conductive contact with each other was measured. Several types of samples having mutually different overall heights H (µm) and substantial disposition intervals D (mm) of the dot spacers 46 were prepared, and the measurement of the pressing force was performed for the several samples. Fig. 4 shows a relationship between the A-value (=H/D) and the pressing force F (N) obtained as a result of the experiment.

In this connection, as an evaluation basis, the upper-limit value of a pressing force F applied by an input operation, generally required in a resistive-type panel-type input device, is preassigned at 4N. In the above experiment, when D = 4mm and H ≤ 5.5µm (i.e., A ≤ 1.375), it was observed that the first and second conductive coats 14, 20 tend to stick to each other at a pressing point P by only the pressing force F not greater than 0.15N. Therefore, as will be understood from Fig. 4, in order to prevent the first and second conductive coats 14, 20 from sticking to each other at the pressing point P and also prevent the pressing force F from exceeding the upper-limit value of generally required pressing force applied by an input operation, it is sufficient that the range of A-value is determined as 1.5 < A < 6.0.

According to the panel-type input device 10 having the above-described configuration, since at least one of the first conductive coat 14 of the first electrode plate 16 and the second conductive coat 20 of the second electrode plate 22 is formed by using a conducting polymer, it is possible to possess superior properties of the conductive coat 14, 20 made of the conducting polymer, such as impact resistance, writing durability, etc., as compared to, e.g., a conventional touch panel in which both electrode plates are provided with ITO coats, and thus to ensure a highly-precise and stable input operation for a long period. Further, since the dot spacers 46 are formed in accordance with the A-value in the aforementioned specific range on the surface 14a of the first conductive coat 14 of the first electrode plate 16, it is possible to prevent the conductive coats 14, 20 from sticking to each other due to a local pressing force applied by an input operation without degrading input operability (i.e., without exceeding the upper-limit value of a pressing force F generally required for an input operation).

It can be predicted that, in a case where both of the first and second conductive coats 14, 20 of the first and second electrode plates 16, 22 are formed by using a conducting polymer, or where the dot spacers 46 are formed on both of the surfaces 14a, 20a of the first and second conductive coats 14, 20, the same effect can be obtained by employing the aforementioned A-value.

The panel-type input device 10 may be configured as a touch panel having a transparent structure, which can be mounted to be superposed on a screen of a display unit, such as a liquid crystal display (LCD), a plasma display panel (PDP), a cathode ray tube (CRT), etc. Alternatively, the panel-type input device 10 may be configured as an opaque or translucent structure known as a pointing device.

The panel-type input device 10 configured as a transparent touch panel may have an exemplary configuration such that the first electrode plate 16 is used as a lower-side electrode plate disposed adjacent to the screen of a display unit, and the first substrate 12 thereof is formed from a transparent glass or resin plate or a transparent resin film. The second electrode plate 22 may be used as an upper-side electrode plate subjected to a pressing operation by an operator, and the second substrate 18 thereof may be formed from a transparent resin film with high flexibility. Resinous materials suitable for the first and second substrates 12, 18 are polycarbonate, acryl, polyethylene terephthalate (PET), etc.

The first conductive coat 14 of the first electrode plate 16 may be formed from a transparent electrically conductive composition such as an ITO, and may be provided by, e.g., vacuum deposition, sputtering, etc., to coat the surface 12a of the first substrate 12. On the other hand, the second conductive coat 20 of the second electrode plate 22 may be formed from a conducting polymer having excellent transparency, and may be provided by, e.g., coating, printing, etc., to coat the surface 18a of the second substrate 18. Since the second conductive coat 20 of the second electrode plate 22, used as an upper-side conductive coat, is formed from the conducting polymer, it is possible to ensure essential properties required for a touch panel, such as writing durability, impact resistance, etc. Further, the first conductive coat 14 may also be formed from a conducting polymer similar to the second conductive coat 20.

One example of the conducting polymer that can be preferably used for the second conductive coat 20 of the panel-type input device 10 is a polythiophene-based conducting polymer as described in JP-A-2005-182737 and JP-A-2005-146259. In particular, in the case where the panel-type input device 10 is configured as a touch panel, the polythiophene-based polymer is preferred in excellent transparency. Other conducting polymers that can be used in the panel-type input device 10 are polyaniline, polypyrrole, polyethylene dioxythiophene (PEDOT), etc.

Thickness of the second conductive coat 20 is not particularly limited, but preferably is in the range of 0.01µm to 10µm, and more preferably is in the range of 0.1µm to 1µm. If the thickness is less than 0.01µm, electrical resistance of the second conductive coat 20 may become unstable, and if the thickness is more than 10µm, adhesiveness relative to the second substrate 18 may be degraded. Surface resistivity (pursuant to, e.g., JIS K6911) of the second conductive coat 20 made of a conducting polymer is not particularly limited, but e.g., is 4800Ω/□ (ohm/square) or less, preferably is 2800Ω/□ or less, and more preferably is 1480Ω/□ or less. If the surface resistivity exceeds 4800Ω/□, input responsiveness may be impaired. It is desirable that the first conductive coat 14 made of an ITO has similar properties. Process of forming the second conductive coat 20 made of a conducting polymer is not particularly limited, but a coating process such as spin coating, roller coating, bar coating, dip coating, gravure coating, curtain coating, die coating, spray coating, doctor coating, kneader coating, etc., or a printing process such as screen printing, spray printing, ink-jet printing, relief printing, intaglio printing, planographic printing, etc., may be employed.

While the invention has been described with reference to specific preferred embodiments, it will be understood by those skilled in the art that various changes and modifications may be made thereto without departing from the scope of the following claims.

## Claims

1. A panel-type input device comprising:
a pair of electrode plates, each electrode plate including a substrate and a conductive coat provided on a surface of said substrate; and
a plurality of dot spacers formed in a dispersed arrangement on a surface of said conductive coat of at least one of said electrode plates;
wherein said electrode plates are assembled with each other in a relative arrangement such that respective conductive coats are opposed to and spaced from each other while permitting a conductive contact therebetween;
wherein said conductive coat of at least one of said electrode plates is formed by using a conducting polymer; and
wherein said dot spacers are formed in such a manner that a value A = H/D, representing a relationship between an overall height Hµm of each dot spacer measured from said surface of said conductive coat, on which said dot spacers are formed, and a substantial disposition interval Dmm of said dot spacers on said surface, is in a range of 1.5 < A < 6.0.
